# EUROPEAN PATENT SPECIFICATION

(11) **EP 0 891 690 B1**
(45) Date of publication and mention of the grant of the patent: **18.09.2002**
(21) Application number: 98112606.3
(22) Date of filing: 08.07.1998
(51) Int. Cl.: A01C 3/06

(54) **A vehicle for spreading spreadable materials and a set of spreader rollers**
Fahrzeug zum Ausbringen von ausstreubaren Materialien und Bausatz aus Spreizwalze
Vehicule pour épandre de la matière épandable et ensemble de rouleaux épandeurs

(30) Priority: 17.07.1997 DK 87797
(43) Date of publication of application: 20.01.1999
(73) Proprietor: MASKINFABRIKEN SAMSON, TANGE A/S, 8850 Bjerringbro (DK)
(72) Inventor: Allerod, Morten, 7800 Skive (DK)
(74) Representative: Elmeros, Claus

(56) References cited:
- DE-A- 2 524 937
- DE-B- 1 009 840
- DE-B- 1 148 795
- DE-B- 1 257 469
- DE-B- 2 122 344

## Description

The present invention relates to a vehicle for spreading spreadable materials, such as farmyard manure, sludge or the like, and comprising a rearwardly open wagon box for receiving and transporting the material and having means, e.g. bottom chains, for moving the material rearwardly in the wagon box toward a spreader device positioned in the opening and comprising a set of upright spreader rollers for spreading the material, as well as drive means for rotating the rollers in opposite directions to each other. The invention moreover relates to a set of spreader rollers for a vehicle for spreading spreadable materials, such as farmyard manure, sludge or the like, comprising two upright spreader rollers which are mountable in the spreader device of the vehicle.

Spreaders of the above-mentioned type are known, comprising two parallel, upright spreader rollers driven in opposite directions to each other and inclined inwardly over the wagon box, typically at an angle of 15° from the vertical. This type of spreaders is characterized by providing a good spreading of the material to the sides. This in itself because the spreader rollers are upright and do not lie horizontally, and additionally because the rollers are inclined rearwardly and thereby throw the material obliquely into the air rearwardly of the spreader, thereby increasing the length of throw.

However, it has been found that the spreading in the lateral direction is not quite satisfactory, so in certain cases the rotary speed of the spreader rollers has been increased in order to obtain a greater lateral throw. This also increases the rearward length of throw, which is not expedient as it causes problems when starting and turning at the ends of a field and difficulties in controlling the dispensed amount of material per unit of area. The increased speed moreover results in considerably more wear on the machine.

Also, from DE 1,148,795, a type of spreader is known with two, three or more spreader rollers, which rollers are tilted slightly backwards toward the wagon. Furthermore, the rollers are rotably mounted on one or more axels, whereby the rollers may be tilted from side to side, in a plane perpendicular to the spreading direction. The effect, which allegedly is obtained, is that the rollers are less likely to be blocked. The disclosed technique is technically complicated requiring the multiple extra components and power for tilting the rollers from side to side. Also, the spreading pattern is negatively affected by the pendular tilting. With the vehicle following a straight line, the pendular tilting will cause the spreading pattern to be sinusoidal along the drive path. Thus an uneven pattern, which is against the basic principle, that the spreading should be as uniform as possible.

In the type of spreaders with horizontally lying spreader rollers where the material is dispensed in a strip corresponding to the width of the rollers, it has been attempted to achieve lateral spreading by arranging-various devices at the sides of the rollers, which, however, only results in a modest lateral spreading. It is common to these additional devices that they require extremely much maintenance and are moreover not very reliable in operation in the extremely rough environment in which they are used. Instead some spreader discs capable of performing lateral spreading of the material have been mounted in connection with the horizontal rollers. This structure has been found to be a mechanically complicated solution, which requires much maintenance, and which has turned out to be not very operationally reliable in a more intensive application of the spreader, as is the case when the spreader is used almost round the clock by machine pools.

Good lateral spreading in the spreading picture will make it possible to spread the material to an area with fewer runs across the area, which is attractive seen from a temporal point of view. Particularly when spreading on fields with a spreader having good lateral spreading, any existing wheel tracks may be used as spray tracks, thereby making it possible to avoid unnecessary damage to the field.

The object of the invention is to provide a vehicle, such as a farmyard manure spreader, where the spreading picture spreads more laterally, and which is still attractive over the known types of manure spreaders in terms of manufacture, operational reliability and maintenance.

The invention comprises a vehicle of the type mentioned in the opening paragraph in which the spreader rollers are oriented non-parallel to each other so that at their axes of rotation they exhibit a greater spacing between each other downwardly than they exhibit upwardly in the spreader device.

This results in a considerably greater length of the lateral throw of the spreader rollers. It has thus been found that merely an angular position of the axis of rotation of a spreader roller of about 2° with respect to the vertical provides a doubling of the length of throw relative to the situation if it was not angled.

When the spreader is loaded, a non-utilized space is created below the rearwardly inclined rollers, and when starting this means that it takes a little while before the spreader rollers are operative also on the lowermost portion. The invention opens up the possibility of allowing the spreader rollers, if not to stand vertically, at any rate to be inclined considerably less rearwardly than before, thereby reducing the triangular space below the rollers and the drawbacks involved by this.

In a preferred embodiment of the invention, the axes of rotation of the spreader rollers are angled symmetrically toward each other, as this also gives the same spreading picture on each side of the spreader, just as it is easier to produce. The angular position of the rollers may be adapted to the desired spreading picture, of course. In the event that e.g. extra long spreading is desired just on one side of the spreader, only the spreader roller at the side where the extra spreading is desired, is angled.

Furthermore, the drive means comprise a power transmission which is connected with a gear box whose take-off shafts are adapted to the angular position of the spreader rollers. This prevents unnecessarily great loading of the suspension of the spreader rollers, which would result in an unnecessarily greater risk of operational stoppages.

The invention moreover comprises a set of spreader rollers for a vehicle for spreading spreadable materials, such as farmyard manure, sludge or the like, comprising two essentially upright spreader rollers which are mountable in a spreader device of the vehicles, wherein the spreader rollers are oriented non-parallel to each other so that at their axes of rotation they exhibit a greater spacing between each other downwardly than they exhibit upwardly in the spreader device.

In this aspect of the invention it is possible to replace existing, possibly worn sets of rollers of a spreader by a set of spreader rollers according to the invention, whereby the same advantages as stated above may be obtained.

The present technique may also be used with a gear box for the coupling of a set of spreader rollers to a power transmission, wherein the take-off shafts, with which the spreader rollers may be coupled, are non-parallel so that they correspond to the orientation of the axes of rotation of the rollers. The spreader rollers may hereby be coupled to the gear box in immediate extension of the take-off shafts rather than having to mount separate transmissions between gear box and spreader rollers.

The invention will be explained more fully below with reference to the accompanying drawing, in which
- fig. 1: is a lateral view of a farmyard manure spreader, and
- fig. 2: is a rear view of the same.

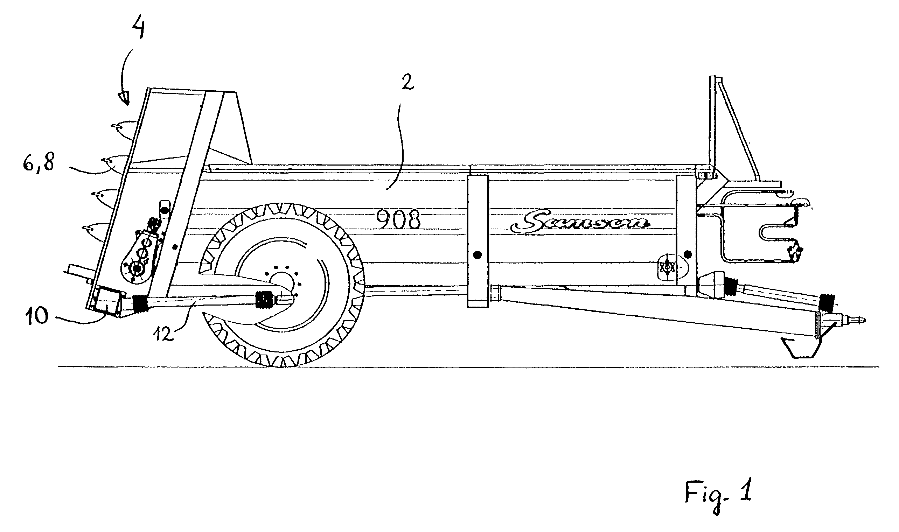

Figure 1 shows a tractor-towed farmyard manure spreader according to the first aspect of the invention. The spreader is constructed as a trailer which may be coupled to a tractor.

It is noted in this connection that the spreader may also be manufactured as an independently propelled vehicle. The spreader comprises a rearwardly open wagon box 2 which is mounted on a chassis provided with wheels, the material for spreading being placed in said wagon box for storage and transport. A plurality of bottom chains (not shown) are arranged at the bottom of wagon box 2, said bottom chains being intended to move the material rearwardly in the wagon box toward a spreader device 4 positioned rearwardly in the wagon in connection with the opening of the wagon box. This spreader device 4 comprises two spreader rollers 6, 8 which rotate in opposite directions to each other, and which are driven by a gear box 10 connected with the rollers via a power transmission 12 which extends below the bottom of the spreader, and which, forwardly on the trailer, may be connected with the power take-off of the tractor.

The spreader device 4 is inclined inwardly over the wagon box at an angle of between 0° and 15° with respect to the vertical, which is favourable with respect to the desired spreading picture for the spreading of the material.

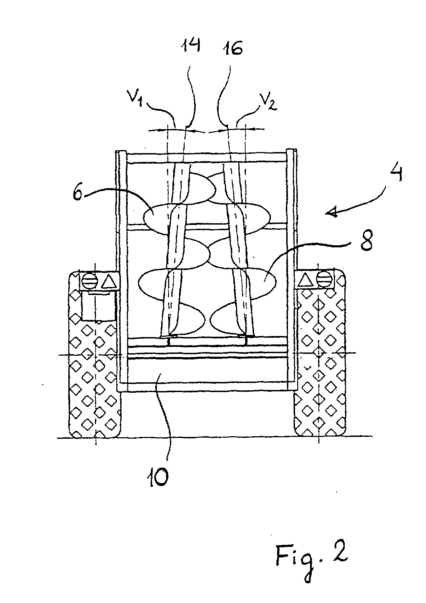

As will appear from fig. 2, the spreader rollers 6, 8 are mounted in the spreader device 4 in such a manner that their axes of rotation 14, 16 are inclined toward each other at the angles v₁ and v₂. These angles are of the same size in the shown preferred embodiment. However, it is realized by the invention that the angles v₁, v₂ may be different, even so that just one roller is positioned at an angle to the vertical, while the other is vertically oriented. An asymmetrical spreading picture may be achieved hereby, which may be favourable in some situations.

At the bottom of the spreader device 4, the rollers 6, 8 are connected with two take-offs in the gear box 10, which are constructed such that the angular position of these take-offs is adapted to the orientation of the axes of rotation 14, 16 of the spreader rollers 6, 8. The rollers 6, 8 are connected with the take-offs of the gear box 10 via some rubber coupling sections (not shown), so that imbalance or inaccuracy of the spreader rollers 6, 8 is prevented from propagating as vibrations in the gear box 10 or in the mounting of the spreader rollers 6, 8 upwardly in the spreader device 4. These rubber couplings can also accommodate a certain angular position of the spreader rollers 6, 8, as is the case with the spreader rollers according to the invention. This means that the spreader rollers 6, 8 according to the invention may be mounted on the gear boxes on existing spreaders, even if they have parallel take-off shafts for the rollers. However, frequent exchange of the rubber couplings must be expected because of great wear due to the fact that the shafts are not positioned in extension of each other. A form of linkage may be used as an alternative to the rubber couplings.

When the spreader rollers 6, 8 are arranged such that they taper upwardly, a significantly wider spreading picture is obtained, as the material is now also thrown upwards in a lateral direction. The material is hereby thrown to the sides along a parabola of throw which throws it considerably longer than if it had been thrown to the side by spreader rollers oriented in parallel. It has thus been found that an angle v₁, v₂ of just about 2° will double the width of the spreading picture. At the same time, material is not thrown further rearwards by the angular position of the rollers 6, 8, which is satisfactory as it is hereby easier to ensure uniform spreading of the material.

## Claims

1. A vehicle for spreading spreadable materials, such as farmyard manure, sludge or the like, and comprising a rearwardly open wagon box (2) for receiving and transporting the material and having means, e.g. bottom chains, for moving the material rearwardly in the wagon box toward a spreader device (4) positioned in the opening and comprising a set of upright spreader rollers (6, 8) for spreading the material, as well as drive means (10, 12) for rotating the rollers (6, 8) in opposite directions to each other,
**characterized in that**
the spreader rollers (6, 8) are oriented non-parallel to each other so that at their axes of rotation (14, 16) they exhibit a greater spacing between each other downwardly than they exhibit upwardly in the spreader device (4).

2. A vehicle according to claim 1, **characterized in that** the axes of rotation (14, 16) of the spreader rollers (6, 8) are symmetrically angled toward each other.

3. A vehicle according to claim 1 or 2, **characterized in that** the axis of rotation (14, 16) of one or both of the spreader rollers (6, 8) is angled about 2° with respect to the vertical.

4. A vehicle according to any one of claims 1-3, **characterized in that** the drive means comprise a power transmission which is connected with a gear box whose take-off shafts are adapted to the angular position of the spreader rollers.

5. A vehicle according to any one of the preceding claims, **characterized in that** the spreader device (4) with the spreader rollers (6, 8) is inclined inwardly over the wagon box (2), preferably by about 15° with respect to the vertical.

6. A set of spreader rollers (6, 8) for a vehicle for spreading spreadable materials, such as farmyard manure, sludge or the like, comprising two essentially upright spreader rollers (6, 8) which are mountable in a spreader device (4) of the vehicle,
**characterized in that**
the spreader rollers (6, 8) are oriented non-parallel to each other so that at their axes of rotation (14, 16) they exhibit a greater spacing between each other downwardly than they exhibit upwardly in the spreader device (4) .

7. A set of spreader rollers according to claim 6,
**characterized in that** the axes of rotation (14, 16) of the spreader rollers (6, 8) are angled symmetrically toward each other.

8. A set of spreader rollers according to claim 6 or 7,
**characterized in that** the axis of rotation (14, 16) of one or both of the spreader rollers (6, 8) is angled about 2° with respect to the vertical.

## Patentansprüche

1. Fahrzeug zum Ausbringen von streufähigen Materialien, wie z. B. Stallmist, Schlamm oder dergleichen, umfassend einen nach hinten offenen Wagenkasten (2) zur Aufnahme und zum Transport des Materials, der Mittel aufweist, wie z. B. Bodenketten, um das Material in dem Wagenkasten nach hinten zu einer Streueinrichtung (4) zu bewegen, die in der Öffnung angeordnet ist und eine Gruppe von aufrechten Streuwalzen (6, 8) zum Ausbringen des Materials sowie eine Antriebseinrichtung (10, 12) zum Verdrehen der Walzen (6, 8) in entgegengesetzten Richtungen umfaßt, **dadurch gekennzeichnet, daß** die Streuwalzen (6, 8) nicht parallel zueinander angeordnet sind, so daß sie an ihren Drehachsen (14, 16) unten einen größeren Abstand voneinander aufweisen als oben in der Streueinrichtung (4).

2. Fahrzeug nach Anspruch 1, **dadurch gekennzeichnet, daß** die Drehachsen (14, 16) der Streuwalzen (6, 8) symmetrisch zueinander geneigt sind.

3. Fahrzeug nach Anspruch 1 oder 2, **dadurch gekennzeichnet, daß** die Drehachse (14, 16) einer oder beider Streuwalzen (6, 8) gegenüber der Vertikalen ungefähr um 2° geneigt ist.

4. Fahrzeug nach einem der Ansprüche 1 bis 3, **dadurch gekennzeichnet, daß** die Antriebseinrichtung eine Leistungsübertragungseinrichtung umfaßt, die mit einem Getriebe verbunden ist, deren Abtriebswellen an die Winkelstellung der Streuwalzen angepaßt ist.

5. Fahrzeug nach einem der vorhergehenden Ansprüche, **dadurch gekennzeichnet, daß** die Streueinrichtung (4) mit den Streuwalzen (6, 8) gegenüber der Vertikalen vorzugsweise ungefähr um 15° nach innen über den Wagenkasten (2) geneigt ist.

6. Bausatz aus Streuwalzen (6, 8) für ein Fahrzeug zum Ausbringen streufähiger Materialien wie z. B. Stallmist, Schlamm oder dergleichen, umfassend zwei im wesentlichen aufrechte Streuwalzen (6, 8), die in einer Streueinrichtung (4) des Fahrzeugs gelagert werden können, **dadurch gekennzeichnet, daß** die Streuwalzen (6,8) nicht parallel zueinander angeordnet sind, so daß sie an ihren Drehachsen (14, 16) unten einen größeren Abstand voneinander aufweisen als oben in der Streueinrichtung (4).

7. Bausatz aus Streuwalzen nach Anspruch 6, **dadurch gekennzeichnet, daß** die Drehachsen (14, 16) der Streuwalzen (6, 8) symmetrisch zueinander geneigt sind.

8. Bausatz aus Streuwalzen nach Anspruch 6 oder 7, **dadurch gekennzeichnet, daß** die Drehachsen (14, 16) einer oder beider Streuwalzen (6, 8) gegenüber der Vertikalen ungefähr um 2° geneigt ist.

## Revendications

1. Véhicule destiné à épandre des matières pouvant être épandues, telles que du fumier, des boues ou équivalent, et comportant une caisse de remorque ouverte vers l'arrière (2) afin de recevoir et transporter la matière et ayant des moyens, par exemple des chaînes inférieures, destinés à déplacer la matière vers l'arrière dans la caisse de remorque vers un dispositif épandeur (4) positionné dans l'ouverture et comportant un ensemble de rouleaux épandeurs verticaux (6, 8) destinés à épandre la matière, ainsi que des moyens d'entraînement (10, 12) destinés à entraîner en rotation les rouleaux (6, 8) dans des directions opposées l'une à l'autre,
**caractérisé en ce que** les rouleaux épandeurs (6, 8) sont orientés de manière non parallèle l'un à l'autre de telle sorte que, au niveau de leurs axes de rotation (14, 16), ils présentent un espacement plus grand entre eux vers le bas que ce qu'ils présentent vers le haut dans le dispositif épandeur (4).

2. Véhicule selon la revendication 1, **caractérisé en ce que** les axes de rotation (14, 16) des rouleaux épandeurs (6, 8) sont inclinés de manière symétrique l'un vers l'autre.

3. Véhicule selon la revendication 1 ou 2, **caractérisé en ce que** l'axe de rotation (14, 16) de l'un ou bien des deux rouleaux épandeurs (6, 8) est incliné d'environ 2° par rapport à la verticale.

4. Véhicule selon l'une quelconque des revendications 1 à 3, **caractérisé en ce que** les moyens d'entraînement comprennent une transmission de force qui est reliée à un boîtier de transmission dont les arbres de prise de force sont adaptés à la position angulaire des rouleaux épandeurs.

5. Véhicule selon l'une quelconque des revendications précédentes, **caractérisé en ce que** le dispositif épandeur (4) avec les rouleaux épandeurs (6, 8) est incliné vers l'intérieur au-dessus de la caisse de remorque (2), de préférence d'environ 15° par rapport à la verticale.

6. Ensemble de rouleaux épandeurs pour un véhicule destiné à épandre des matières pouvant être épandues, telles que du fumier, des boues ou équivalent, comportant deux rouleaux épandeurs sensiblement verticaux (6, 8) qui peuvent être montés dans un dispositif épandeur (4) du véhicule,
**caractérisé en ce que** les rouleaux épandeurs (6, 8) sont orientés de manière non parallèle l'un à l'autre de telle sorte que, au niveau de leurs axes de rotation (14, 16), ils présentent un espacement plus grand entre eux vers le bas que ce qu'ils présentent vers le haut dans le dispositif épandeur (4).

7. Ensemble de rouleaux épandeurs selon la revendication 6, **caractérisé en ce que** les axes de rotation (14, 16) des rouleaux épandeurs (6, 8) sont inclinés de manière symétrique l'un vers l'autre.

8. Ensemble de rouleaux épandeurs selon la revendication 6 ou 7, **caractérisé en ce que** l'axe de rotation (14, 16) de l'un ou bien des deux rouleaux épandeurs (6, 8) est incliné d'environ 2° par rapport à la verticale.
